# EUROPEAN PATENT SPECIFICATION

(11) **EP 1 653 390 B1**
(45) Date of publication and mention of the grant of the patent: **04.05.2011**
(21) Application number: 05108002.6
(22) Date of filing: 01.09.2005
(51) Int. Cl.: G06K 7/00

(54) **Electrical connector for a chip card, including fraud protection means**
Elektrische Chip-Kartenverbinder mit einem Schutz gegen Zugriffe
Connecteur électrique pour carte à puce comportant des moyens de protection contre la fraude

(30) Priority: 07.09.2004 FR 0451974
(43) Date of publication of application: 03.05.2006
(73) Proprietor: CoActive Technologies, Inc., Greenwich, CT 06848 (US)
(72) Inventor: Valcher, Fabrice, 39100 DOLE (FR); Masson, Olivier, 3910 DOLE (FR); Daubigney, Patrick, 39100 AUTHUME (FR)
(74) Representative: Kohn, Philippe

(56) References cited:
- US-A- 5 775 949
- US-B1- 6 447 338

## Description

The present invention relates to an electrical connector for connecting an electronic memory card, said memory card including a plurality of electrical contact pads on one of its main faces.

The invention relates, for example, to an electrical connector of this type in which the memory card is inserted from the rear forwards in a longitudinal direction parallel to the general horizontal plane of the card.

According to various known designs, the connector comprises mainly a contact-bearing block made of insulating material having a horizontal upper plane face and a plurality of electrical conductors, each of which is in the form of an elastically deformable blade.

The blades are arranged parallel to a longitudinal horizontal direction that corresponds to the direction of insertion of the card when the latter is inserted horizontally parallel to its plane.

According to a known design, each one of said plurality of contact blade comprises:
- a curved first end for contact with a corresponding pad on the card placed in the horizontal lower face of the latter, this first end projecting vertically upwards, from the upper plane face of the insulating block;
- a longitudinal central portion for connecting the blade to the insulating block, it being possible for the connection to be made for example by longitudinal insertion with catching barbs or else by overmoulding; and
- a second end for electrically connecting the blade, constituting a pad for electrically connecting the blade to a processing circuit of a read/write device equipped with such an electrical connector.

Among the various contact blades parallel to one another, in one or more groups of several blades - for example in two groups of four blades aligned longitudinally in pairs - the connector includes at least one first, "signal" contact blade.

It should be noted, for example, that among the signal contact blades is what is called the "input/output" contact blade or I/O blade, which is in contact with a corresponding pad on the card and produces an I/O signal when the card is in position.

Among the various contact blades, the connector also includes at least one second, "earth" contact blade intended to be in contact with a corresponding pad on the card and is connected to an earth circuit of the read/write device equipped with the connector. See for example US-A-6.447.338 or US-5.775.949.

Various attempts at fraud on read/write devices fitted with such a connector include, in particular, a step with the purpose of reaching the first I/O contact blade.

Such a manoeuvre is a determining step for perpetrating a fraud on the card.

For this purpose, a fraudster may for example drill a hole in the insulating block and/or in the printed circuit board which is equipped, on its upper face, with the connector.

The object of the invention is to improve the general security of read/write devices by providing means for detecting and preventing such an attempt at fraud.

For this purpose, the invention proposes an electrical connector in accordance with claim 1.

Thus, any attempt at reaching the first (I/O) blade by means of a metal object, for example by means of a metal drill, results in an electrical connection being made between the protective plate, which is earthed, and the first contact plate.

This then results in a short-circuit by the earthing of the said first blade, which constitutes a signal representative of an attempted fraud.

According to other features of the invention:
- the said first protective metal plate extends vertically opposite a portion of the pad for connecting the first blade and is electrically connected to the second blade;
- the said first protective metal plate lies in a transverse plane orthogonal to the general longitudinal direction of the connection pad that it protects;
- the connection pad of the first blade includes at least one vertical branch of transverse orientation parallel to the said first protective plate;
- the connection pad of the first blade includes at least one lower horizontal branch that extends the vertical branch rearwards and lies substantially in the plane of the lower face of the insulating block;
- the said first protective plate extends over at least the entire height of the vertical branch of the connection pad for the first blade;
- the said first protective plate extends vertically upwards from the plane of the lower face of the insulating block;
- the connector includes two second mutually parallel and opposed protective plates, each of which extends vertically opposite a portion of the connection pad of the first blade, lies in a lateral plane parallel to the longitudinal direction of the connection pad that it protects and is electrically connected to the second blade so as to protect the connection pad on its two longitudinal sides;
- the connector includes at least one third protective metal plate which extends horizontally opposite the longitudinal central portion, for connecting the first blade to the insulating block, and which is electrically connected to the second contact blade
- the connector includes a support made of insulating material, which carries each protective plate and is attached in a complementary housing of the lower face of the insulating block;
- a vertical partition made of the insulating material of the said support is interposed between each protective plate and that portion of the first, signal blade opposite which this protective plate extends;

Other features and advantages of the invention will become apparent on reading the following detailed description, to understand which the reader may refer to the appended drawings in which:
- Figure 1 is a perspective top rear three-quarter view of one embodiment of an electrical connector according to the teachings of the invention; which includes an electrical connector and, in exploded perspective, part of the printed circuit board that bears the connector, the protective cage with its insulating support both being illustrated in their initial, temporary assembly position;
- Figure 2 is a perspective bottom view similar to that of Figure 1;
- Figure 3 is an exploded perspective view of the protective metal cage and of its insulating support at the angle of representation of Figure 1;
- Figure 4 is a view similar to that of Figure 3, which illustrates the two components at the viewing angle of Figure 2;

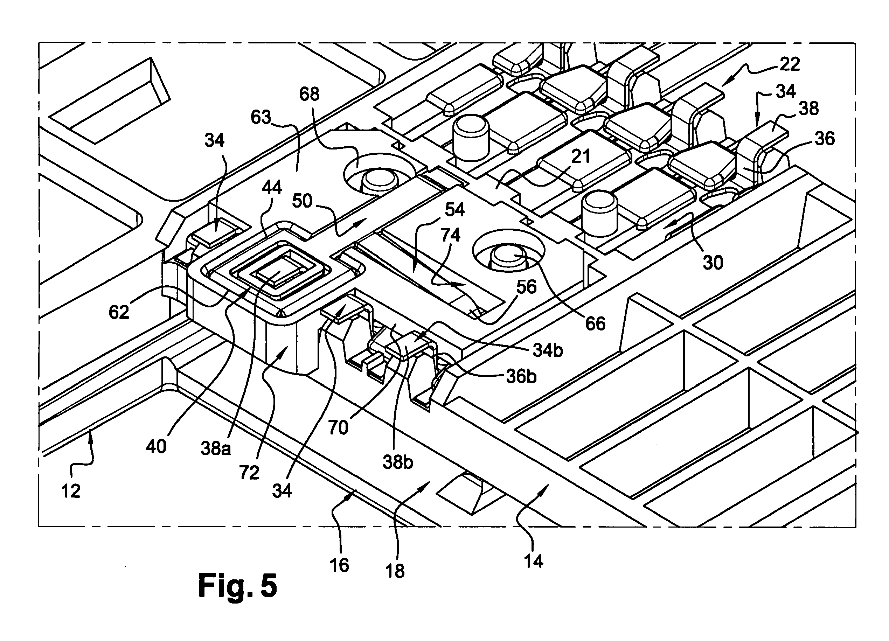

- Figure 5 is a detailed view on a larger scale of part of Figure 2;
- Figure 6 is a large-scale bottom view of a detail of the lower face of the connector illustrated in Figures 2 and 5;
- Figure 7 is a large-scale sectional detailed view large-scale along the line 7-7 of Figure 6; and
- Figures 8 to 10 are views similar to those of Figures 3 to 5, which illustrate an alternative embodiment of the metal protective cage and its insulating support.

In the description that follows, identical, similar or analogous components will be denoted by the same reference numerals.

Without implying any limitation, to make it easier to understand the description and the drawings the terms "vertical", "horizontal", "lower", "upper", "top", "bottom", "transverse", "longitudinal", etc. will be adopted with reference to the reference frame L, V, T indicated in the figures.

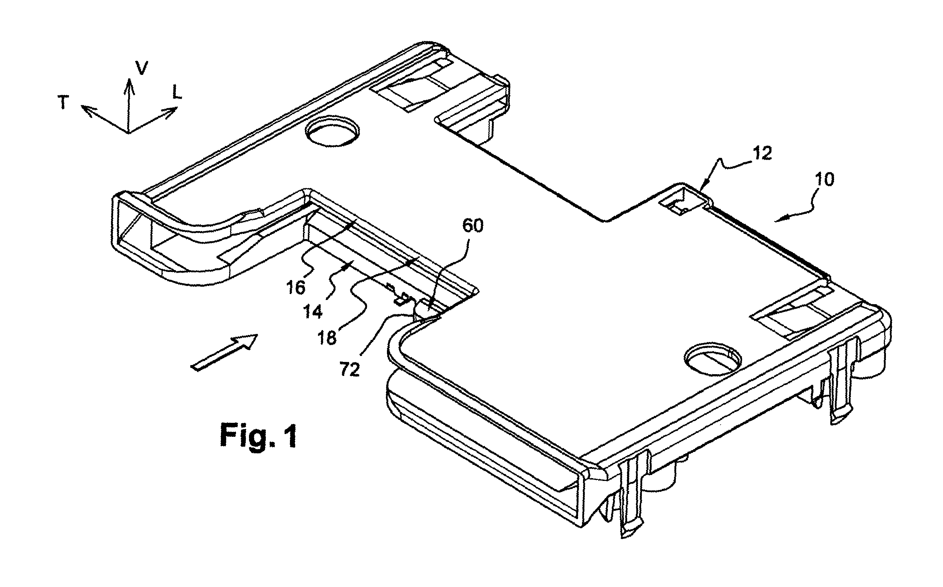

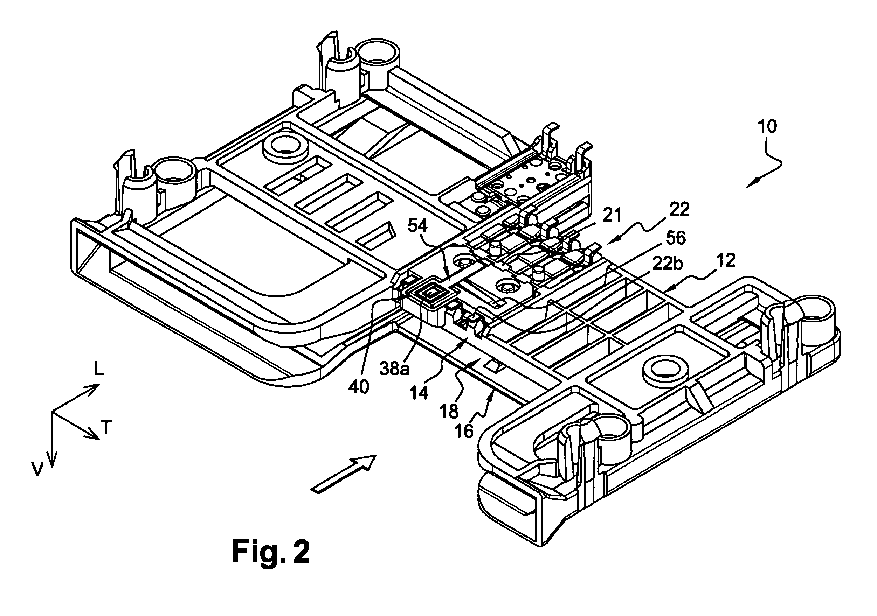

Figures 1 and 2 show a connector 10 consisting essentially of an insulating plastic body or case produced by moulding.

The general design of the connector 10 with its insulating body 12 is here of the type described and shown in the document US-A-5 775 949.

The case 12 essentially consists of a lower horizontal plate 14 and an upper horizontal plate 16 which between them define a longitudinal slot 18 for the forward insertion, from the rear, along the direction indicated by the arrow "L" in Figures 1 and 2, of a memory card (not shown) that includes, on its lower face oriented so as to be opposite the upper facing face 20 of the lower plate 14, conducting pads placed in a standardized fashion.

In its central part, along the transverse direction "T", the lower plate 14 constitutes the contact-bearing insulating block of the connector which bears, in a known fashion, two groups of four electrical contact blades 22.

The general design of the contact-bearing block with its blades is for example described and shown in detail in the document US-A-6 447 338.

All the contact blades here are identical.

Each contact blade 22 generally lies in a longitudinal vertical plane and includes a substantially horizontal upper branch 24 that has a convex curved first end 26 called the "contact" end with a corresponding pad on the card. The free contact end 26 projects, vertically upwards through a hole 28, from the horizontal plane of the upper plane face 20 of the insulating block 14.

The blade 22 has a lower horizontal branch 30 that is connected to the upper contact branch 24 via a strand 32 sharply angled through 180° so that the blade 22 has here the form of a hairpin.

The horizontal branch 30 constitutes the longitudinal central connection portion of the contact blade 22, which connection portion ensures that the blade 22 is positioned and fastened in the insulating block 14.

The connecting lower branch 30 is extended by and terminates in a second end of the contact blade 22, called the connection end, which is in the form of a right-angled connection tab 34 which allows the blade 22 to be electrically connected to a processing circuit (not shown) of a read/write device (not shown).

The connection tab 34 includes here a vertical branch 36 that extends, from the end of the connecting branch 30, downwards, so as to be approximately level with the lower horizontal face 21 of the insulating block 14.

The connection tab 34 also includes a horizontal branch 38 that extends the vertical branch horizontally towards the rear and lying slightly below the plane of the lower face 21.

The connection tabs 34, each with a horizontal branch 38, are in this case of the type to be soldered, for example reflow-soldered, to corresponding conducting tracks on the upper face of a printed circuit board (PCB) not shown in the figures.

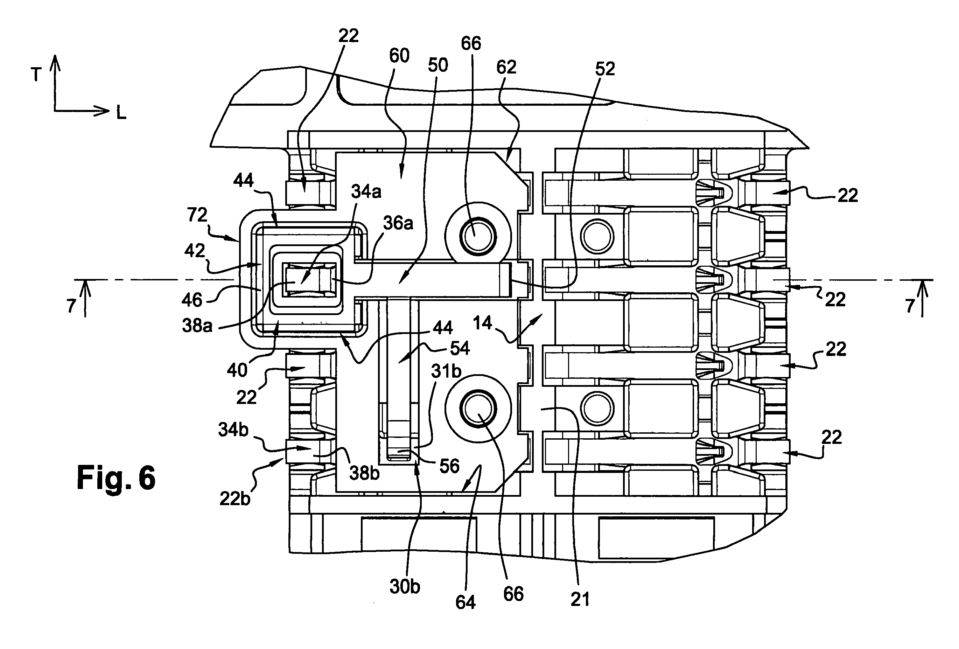

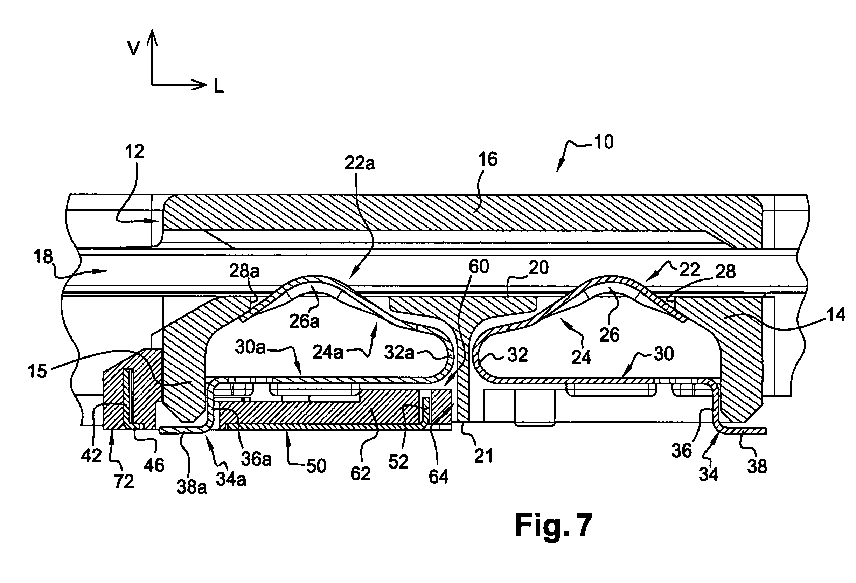

As may be seen for example in the right-hand part of Figures 6 and 7, it is possible, in the design of the prior art of a blade not protected against break-ins, to access this contact blade, for example vertically upwards and/or longitudinally from the right to the left when considering the right-hand contact blade 22 of Figure 7.

The invention aims to preferentially protect one first of the contact blades 22, which in this case is the I/O blade 22a called the first "signal" blade, the design of which is in every point analogous to that of the seven other blades of the connector, and therefore analogous to that which has just been described in detail.

In the figures and the rest of the description, the contact blade protected according to the teachings of the invention, and all its parts, will be denoted by the same reference numerals as the other blades, but with the letter "a" as suffix.

Among the group of eight blades of the connector may also be distinguished the blade 22b, called the second "earth" blade, denoted, together with all its parts, by the same reference numerals but with the letter "b" as suffix.

In the embodiment illustrated in the figures, and according to the standardization in force, the earth contact blade 22b is a blade that belongs to the same group of four blades as the contact blade 22a and is placed parallel to the latter, with another contact blade 22 interposed between the blades 22a and the blades 22b.

If it is desired to protect the contact blade 22a against any attempt at break-in, it is desirable to protect, on the one hand, its lower branch 30a and, on the other hand, its connection tab 34a with its two branches 36a and 38a.

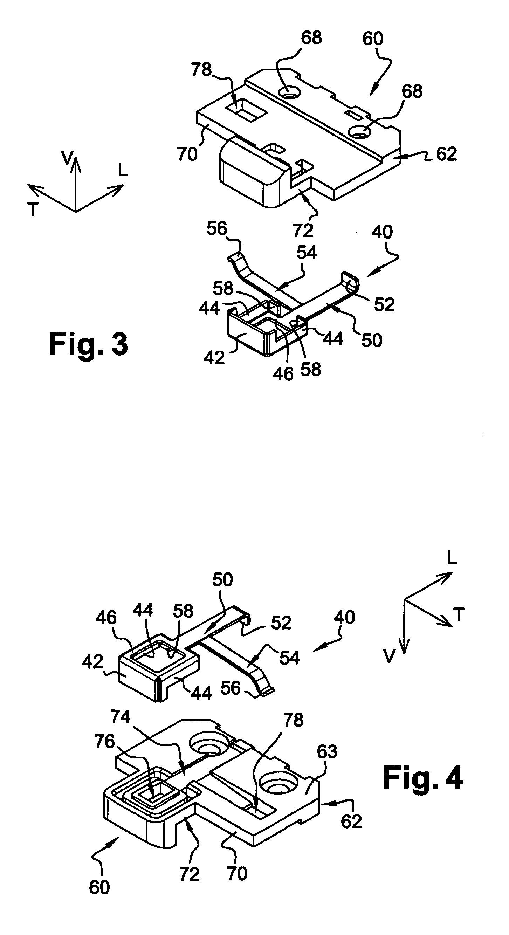

According to the teachings of the invention, this protection is achieved by means of a protective metal cage 40, which is illustrated in particular in perspective in Figures 3 and 4.

The protective metal cage 40 is made of a conductive metal sheet, cut and folded.

It consists mainly of a first, vertical rear transverse, protective plate 42 and of two second opposed lateral vertical longitudinal plates 44 that are joined together by a horizontal lower frame 46 of square outline.

In the mounted position of the protective cage 40 in the insulating block 14 of the connector 10, and as may be seen in particular in Figure 7, the transverse first protective plate 42 extends vertically upwards from the plane of the lower face 21 of the insulating block 14 over a height greater than that of the connection tab 34a, and especially over a height greater than that of the transverse vertical branch 36a of the connection tab 34a.

As may be seen in Figures 2 and 3, the longitudinally oriented lateral vertical plates 44 extend over a smaller height, vertically upwards, than that of the plate 42 and they have the function of laterally protecting the horizontal branch 38a, along its two opposed longitudinal sides.

It will thus be understood that any attempt at gaining access to the connection tab either in a horizontal, longitudinal direction from the rear, by transpiercing the plate 42, or in horizontal, transverse direction from one side or the other, by transpiercing one of the lateral plates 44, results in the protective cage 40 being brought into electrical contact with the contact blade 22a, that is to say especially with its connection tab 34a.

In so far as - in accordance with the teachings of the invention and as will be described further on - the protective cage 40 is itself electrically connected to the earth contact blade 22b, the break-in attempt results in the earth short-circuiting of the contact blade 22a.

As may be seen in Figures 3 and 4, in the plane of the horizontal frame 46, the protective cage 40 is extended longitudinally towards the centre of the insulating block 14 by a third lower horizontal protective plate 50 of longitudinal orientation which, in the mounted position of the protective cage, and as may be seen in Figures 6 and 7, extends longitudinally opposite the lower horizontal connection branch 30a of the contact blade 22a.

As may be seen in Figures 3, 4 and 7, the free end of the horizontal protective plate 50 has an upwardly curved vertical strand 52.

Any attempt at reaching the blade 22a in line with its lower horizontal branch 30b, by passing through the lower horizontal protective plate 50, again results in a short circuit being established between the blade 22a and earth.

As may be seen in Figures 3, 4 and 6, the protective cage 40 includes a lateral tongue 54 that extends transversely from a longitudinal edge of the horizontal contact plate 50.

This earth contact tongue 54 has a convex curved free end section 56, the convexity of which is oriented upwards, which free end section, in the mounted position of the protective cage 40, is in electrical contact with a facing portion of the lower face 31 b of the horizontal connection branch 30b of the earth contact blade 22b.

The shape of the connection tongue 54 with its curved end 56 and the attachment of the protective cage 40 are such that the end 56 is in bearing elastic contact with the lower face 31 b.

The protective cage 40 thus makes it possible to protect most of the sensitive regions of the contact blade 22a that are accessible.

It will be noted that the upwardly curved strand 52, in co-operation with two small vertical transverse protective plates 58, which are parallel to the rear transverse protective plate 42, which extend laterally on either side of the horizontal plate 50 and which are connected to the frame 46, also provides protection against any attempt aimed at piercing longitudinally and horizontally, from the right to the left when considering Figure 7, in order to reach, for example, the vertical transverse branch 36a.

According to another feature of the invention, an insulating support 60 consisting of a moulded component made of insulating plastic is provided in order to insulate and mount the protective cage 40.

Overall, the support 60 is in the form of a horizontal plate 62 of substantially rectangular shape, which is housed in a pre-existing complementary housing 64 formed in the lower face 21 of the insulating block 14 and which is open vertically downwards.

As may be seen especially in Figure 6, the insulating support 60 extends transversely opposite the four blades of the group to which the blades 22a and 22b belong and substantially longitudinally over the greater part of the length of these blades.

The insulating support 60 in the housing 64 is for example attached by means of plastic studs 66 of the insulating block 14, which studs pass through corresponding holes 68 in the plate 62, the lower free ends of which studs are hot-crimped.

The plate 60 may also be attached by any other means, for example by adhesive bonding.

The plate 60 may also be held in place in the housing 64, sandwiched between the insulating body and the upper face of the printed circuit board PCB (not shown) on which the connector 10 is mounted.

Near its rear transverse edge 70, the plate 62 of the insulating support 60 has a rearward longitudinal extension 72.

Formed in the lower face 63 of the plate 22, and of its extension 72, is a housing 74 that is complementary to the shapes and dimensions of the protective cage 50 so that the latter can be inserted into the housing 74 and attached therein.

The protective cage 40 and the insulating support 60 may be produced in the form of independent components that are assembled subsequently.

According to an alternative embodiment, the insulating support 60 may be produced by overmoulding around the protective metal cage 40.

The extension 72 has, at its centre, a rectangular parallelepipedal hole 76 opening vertically at its two ends and intended to house, as may be seen in Figures 6 and 7, the connection tab 34a and a vertical partition portion 15 of the corresponding part of the insulating block 14.

The design of the plate 62 with its extension 72 and of the housing 74, in association with the design of the protective cage 40, are such that, in the mounted and assembled position of the protective cage 40 with its insulating support 60, there is always a partition of insulating plastic between a protective plate belonging to the protective cage 40 and a facing portion of the contact blade 22a, especially a facing portion of its connection tab 34a or of its horizontal connection branch 30a.

Of course, the support plate 62 also includes another vertical opening hole 78 for the passage of the convex curved end 56 of the lateral earth connection tongue.

The invention is not limited to the embodiment that has just been described.

As alternative embodiments (not shown), the invention can be applied to all types of connector having a contact-carrying insulating block independently of the design of the means for guiding the card, it being possible for the latter to be put into place in any orientation relative to the contact-bearing insulating block 14.

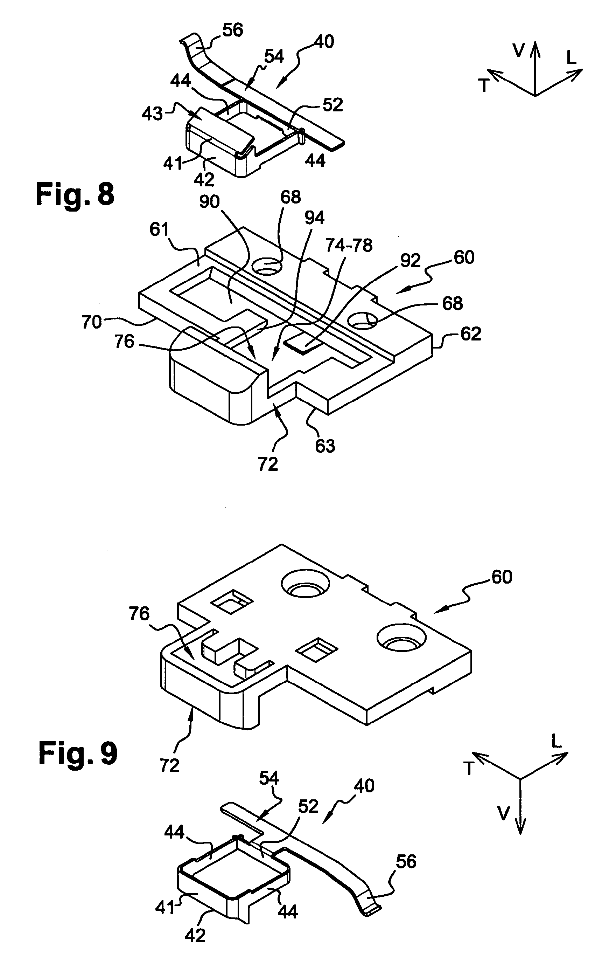

In the embodiment illustrated in Figures 8 to 10, it may firstly be seen that the protective metal cage 40 is modified as follows.

Firstly, the first transverse plate 42, which extends transversely and vertically upwards, is extended, from its upper transverse edge 41, by a complementary inclined transverse plate 43 so as to even better protect against any attempt to access the connection tab 34a in longitudinal (from the left to the right) inclined direction through the card insertion slot.

Moreover, the upwardly curved strand 52 and the two small vertical transverse protective plates 58 are here replaced by a front vertical transverse plate 52, which is parallel to the first tab 42 and extends over the entire transverse width of the metal cage 40 in order to connect the ends of the lateral vertical plates 44.

Thus, the frame 46 (illustrated previously) is omitted and the four vertical plates 42, 44 and 52 constitute a loop of square outline constituting a protective cage around the connection tab 34a.

The earth contact tongue 54 is connected to the upper transverse edge of the plate 52.

In this alternative embodiment, the protective cage 40 does not include a horizontal longitudinal protective plate such as the plate 50 (illustrated previously).

The insulating support 60 is also modified and adapted to the modified design of the protective cage 40.

As may be seen in Figures 8 to 10, the support 60 in the form of a rectangular plate includes, in this case in its upper face 61, a large central housing 74, 78 of rectangular outline which essentially houses the earth contact tongue 54 and includes, in its bottom 90, complementary moulded shapes 92 and 94 which allow preassembly and retention in the assembled position of the cage 40 in the insulating support 60, by plastic snap-fastening of the tongue 50 into the moulded shapes 92 and 94.

For this purpose, the cage 40 is generally put into place and snap-fastened in the support 60 vertically downwards when considering Figure 3.

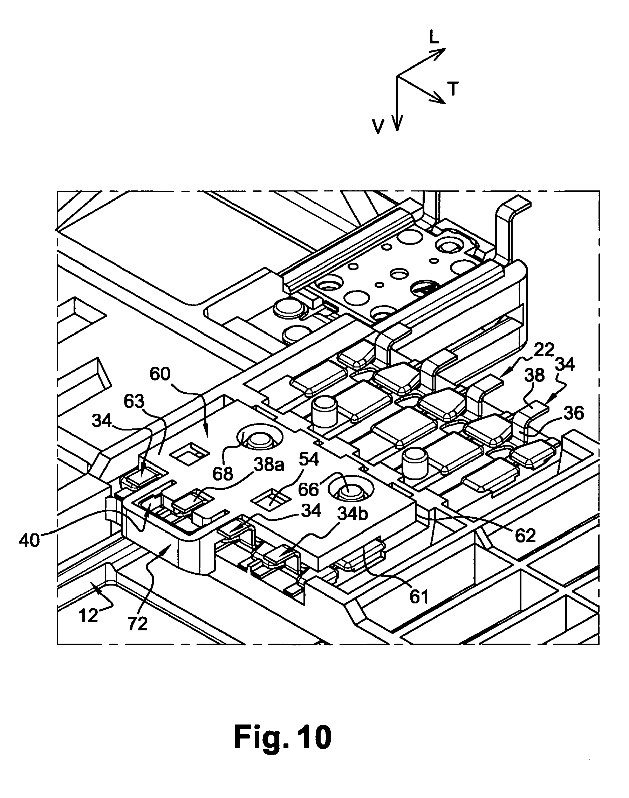

When the combination of components illustrated in Figure 10 has been mounted and assembled, it will be understood that the cage 40 is interposed vertically between the insulating support 60 and the bottom of the complementary housing 64 formed in the lower face 21 of the insulating block 14.

As may be seen in Figure 10, no conducting part of the protective metal cage 40 is flush with the lower face 63 of the insulating support 60.

The invention is not limited to the design of the connection tabs 34, and especially of the connection tab 34a, which is bent over for being connected by soldering or reflow-soldering.

The connection tab 34a may for example extend vertically, being of the type to be inserted into holes in the printed circuit board.

Likewise, the invention is not limited to the design of the electrical contact blades described, and especially that of the hairpin contact blade 22a, rather it can also be applied in the case of contact blades of the "cantilever" type, in which the curved free end is formed at the end of the connection branch 30a.

It is also possible to protect several contact blades of the connector.

## Claims

1. Electrical connector (10) for the connection of an electronic memory card, said memory card including, on one of its main faces, a plurality of electrical contact pads,
the connector (10) comprising:
a contact-bearing block (14) made of insulating material and having a plane horizontal upper face (20) and a plurality of electrical conductors (22, 22a, 22b) in the form of elastically deformable contact blades arranged parallel to a longitudinal horizontal direction, said plurality of contact blades comprising at least one first "signal" contact blade (22a) and a second "earth" contact blade (22b),
each one of said plurality of contact blades (22, 22a, 22b) comprising:
- a curved first end (26, 26a) for contact with a corresponding pad on the card, this first end projecting from the said upper plane face (20) of the insulating block (14);
- a longitudinal central portion (30, 30a, 30b) for connecting the blade to the insulating block (14); and
- a second end for connecting the blade, constituting a pad (34, 34a, 34b) for electrically connecting the blade (22, 22a, 22b) to a processing circuit of a read/write device,
**characterized :**
- **in that** the connector includes at least one first protective metal plate (42) that extends opposite a facing portion of the said first signal blade (22a) and that is electrically connected to the said second earth blade (22b),
- and **in that** each protective plate forms part of a protective conductive metal cage (40) which includes a conducting tongue (54) that extends transversely, the free end (56) of this tongue (54) being in electrical contact with the said second blade (22b).

2. Connector according to claim 1, **characterized in that** it said first protective metal plate (42) extends vertically opposite a portion (36a) of the pad (34a) for connecting the said first blade (22a) and is electrically connected to the said second blade (22b).

3. Connector according to either of claims 1 or 2, **characterized in that** the said first protective metal plate (42) lies in a transverse plane orthogonal to the longitudinal direction (L) of the connection pad (34a) that it protects.

4. Connector according to claim 3, **characterized in that** the connection pad (34a) of the said first blade (22a) includes at least one vertical branch (36a) of transverse orientation parallel to the said first protective plate (42).

5. Connector according to claim 4, **characterized in that** the connection pad (34a) of the said first blade (22a) includes at least one lower horizontal branch (38a) that extends the vertical branch (36a) rearwards and lies substantially in the plane of the lower face (21) of the insulating block (14).

6. Connector according to either of Claims 4 or 5, **characterized in that** the said first protective plate (42) extends over at least the entire height of the vertical branch (36a) of the connection pad (34a).

7. Connector according to Claim 6 taken in combination with Claim 5, **characterized in that** the said first protective plate (42) extends vertically upwards from the said plane of the lower face (21) of the insulating block (14).

8. Connector according to any one of claims 1 to 7, **characterized in that** the connector (10) includes two second mutually parallel and opposed protective plates (44), each of which extends vertically opposite a portion of the connection pad (34a) of the said first blade (22a), lies in a lateral plane parallel to the longitudinal direction (L) of the connection pad (34a) that it protects and is electrically connected to the said second blade (22b) so as to protect the connection pad on its two longitudinal sides.

9. Electrical connector according to any one of claims 1 to 8, **characterized in that** it includes at least one third protective metal plate (50) which extends horizontally opposite the longitudinal central portion (30a), for connecting the said first blade (22a) to the insulating block, and which is electrically connected to the said second blade (22b).

10. Electrical connector according to any one of claims 1 to 9, **characterized in that** it includes a support (60) made of insulating material, which carries each protective plate and is attached in a complementary housing (64) of the lower face (21) of the insulating block (14).

11. Electrical connector according to claim 10, **characterized in that** a vertical partition made of the insulating material of the said support (60) is interposed between each protective plate and that portion of the said first blade (22a) opposite which this protective plate extends.

## Patentansprüche

1. Elektrischer Verbinder (10) für den Anschluss einer elektronischen Speicherkarte, wobei die Speicherkarte auf einer ihrer Hauptflächen eine Vielzahl elektrischer Kontaktfelder besitzt,
wobei der Verbinder (10) aufweist:
einen kontakttragenden Block (14) aus isolierendem Material und mit einer ebenen horizontalen oberen Fläche (20) und einer Vielzahl elektrischer Leiter (22, 22a, 22b) in Form elastisch verformbarer Kontaktmesser, die parallel zu einer Längsrichtung horizontal angeordnet sind, wobei die Vielzahl der Kontaktmesser mindestens ein erstes "Signal"-Kontaktmesser (22a) und ein zweites "Masse"-Kontaktmesser (22b) aufweist,
wobei jedes Kontaktmesser aus der Vielzahl der Kontaktmesser (22, 22a, 22b) aufweist:
ein gebogenes erstes Ende (26, 26a) für den Kontakt mit einem entsprechenden Feld auf der Karte, wobei dieses erste Ende aus der oberen ebenen Fläche (20) des isolierenden Blocks (14) herausragt;
einen in Längsrichtung verlaufenden, mittleren Teil (30, 30a, 30b) zum Verbinden des Messers mit dem isolierenden Block (14); und
ein zweites Ende zum Verbinden des Messers, ein Feld (34, 34a, 34b) zum elektrischen Verbinden des Messers (22, 22a, 22b) mit einem Verarbeitungskreis einer Lese-/Schreibvorrichtung bildend,
**dadurch gekennzeichnet,**
**dass** der Verbinder mindestens eine erste Schutzplatte (42) aus Metall besitzt, die sich gegenüber einem zugewandten Teil des ersten Signalmessers (22a) erstreckt und die mit dem zweiten Massemesser (22b) elektrisch verbunden ist,
und dadurch, dass jede Schutzplatte Teil eines leitfähigen Schutzkäfigs (40) aus Metall ist, der eine quer verlaufende, leitende Zunge (54) besitzt, wobei das freie Ende (56) dieser Zunge (54) in elektrischem Kontakt mit dem zweiten Messer (22b) ist.

2. Verbinder gemäß Anspruch 1, **dadurch gekennzeichnet, dass** die erste Schutzplatte (42) aus Metall sich vertikal gegenüber einem Teil (36a) des Feldes (34a) erstreckt, um das erste Messer (22a) zu verbinden, und mit dem zweiten Messer (22b) elektrisch verbunden ist.

3. Verbinder gemäß einem der Ansprüche 1 und 2, **dadurch gekennzeichnet, dass** die erste Schutzplatte (42) aus Metall in einer quer verlaufenden Ebene im rechten Winkel zur Längsrichtung (L) des Verbindungsfeldes (34a), das sie schützt, liegt.

4. Verbinder gemäß Anspruch 3, **dadurch gekennzeichnet, dass** das Verbindungsfeld (34a) des ersten Messers (22a) mindestens einen vertikalen Abschnitt (36a) in Querorientierung parallel zur ersten Schutzplatte (42) besitzt.

5. Verbinder gemäß Anspruch 4, **dadurch gekennzeichnet, dass** das Verbindungsfeld (34a) des ersten Messers (22a) mindestens einen unteren horizontalen Abschnitt (38a) besitzt, der den vertikalen Abschnitt (36a) nach hinten verlängert und im Wesentlichen in der Ebene der unteren Fläche (21) des isolierenden Blocks (14) liegt.

6. Verbinder gemäß einem der Ansprüche 4 und 5, **dadurch gekennzeichnet, dass** die erste Schutzplatte (42) sich über mindestens die gesamte Höhe des vertikalen Abschnitts (36a) des Verbindungsfeldes (34a) erstreckt.

7. Verbinder gemäß Anspruch 6 in Verbindung mit Anspruch 5, **dadurch gekennzeichnet, dass** die erste Schutzplatte (42) sich von der Ebene der unteren Fläche (21) des isolierenden Blocks (14) vertikal nach oben erstreckt.

8. Verbinder gemäß einem der Ansprüche 1 bis 7, **dadurch gekennzeichnet, dass** der Verbinder (10) zwei zweite, zueinander parallele und gegenüberliegende Schutzplatten (44) besitzt, von denen jede sich vertikal gegenüber einem Teil des Verbindungsfeldes (34a) des ersten Messers (22a) erstreckt, in einer seitlichen Ebene parallel zur Längsrichtung (L) des Verbindungsfeldes (34a), das sie schützt, liegt und mit dem zweiten Messer (22b) elektrisch verbunden ist, um das Verbindungsfeld auf seinen zwei Längsseiten zu schützen.

9. Elektrischer Verbinder gemäß einem der Ansprüche 1 bis 8, **dadurch gekennzeichnet, dass** er mindestens eine dritte Schutzplatte (50) aus Metall besitzt, die sich horizontal gegenüber dem in Längsrichtung verlaufenden, mittleren Teil (30a) erstreckt, um das erste Messer (22a) mit dem isolierenden Block zu verbinden, und die mit dem zweiten Messer (22b) elektrisch verbunden ist.

10. Elektrischer Verbinder gemäß einem der Ansprüche 1 bis 9, **dadurch gekennzeichnet, dass** er eine Halterung (60) aus isolierendem Material besitzt, welche die jeweilige Schutzplatte trägt und in einem komplementären Gehäuse (64) der unteren Fläche (21) des isolierenden Blocks (14) angebaut ist.

11. Elektrischer Verbinder gemäß Anspruch 10, **dadurch gekennzeichnet, dass** eine vertikale Trennwand aus dem isolierenden Material der Halterung (60) zwischen der jeweiligen Schutzplatte und demjenigen Teil des ersten Messers (22a) angeordnet ist, gegenüber dem sich diese Schutzplatte erstreckt.

## Revendications

1. Connecteur électrique (10) pour le raccordement d'une carte à mémoire électronique, ladite carte à mémoire comportant, dans une de ses faces principales, une pluralité de plages de contact électrique,
le connecteur (10) comportant
un bloc en matériau isolant formant porte-contacts (14) présentant une face plane (20) supérieure horizontale et une pluralité de conducteurs électriques (22, 22a, 22b) en forme de lames déformables élastiquement et disposées parallèlement à une direction horizontale longitudinale, ladite pluralité de lames de contact comportant au moins une première lame de contact (22a) dite de signal et une deuxième lame de contact (22b) dite de masse,
chaque lame de la pluralité de lames (22, 22a, 22b) de contact comprenant :
- une première extrémité incurvée (26, 26a) de contact avec une plage correspondante de la carte, cette première extrémité faisant saillie hors du plan de la face plane supérieure (20) du bloc isolant (14) ;
- une portion médiane longitudinale (30, 30a, 30b) de liaison de la lame au bloc isolant (14) ; et
- une seconde extrémité de raccordement de la lame constituant une patte (34, 34a, 34b) de raccordement électrique de la lame (22, 22a, 22b) à un circuit de traitement d'un dispositif de lecture-écriture ;
**caractérisé :**
- **en ce que** le connecteur comporte au moins une plaque métallique de protection (42, 44, 50) qui s'étend en regard d'une portion en vis-à-vis de la première lame de signal (22a), et qui est reliée électriquement à la deuxième lame de masse (22b),
- et **en ce que** chaque plaque de protection appartient à une cage métallique de protection (40) qui comporte une languette conductrice (54) qui s'étend transversalement et dont l'extrémité libre (56) est en contact électrique avec ladite seconde lame (22b).

2. Connecteur selon la revendication 1 , **caractérisé en ce que** ladite première plaque métallique de protection (42) s'étend verticalement en regard d'une portion (36a) de la patte (34a) de raccordement de la première lame de signal (22a), et est reliée électriquement à ladite deuxième lame (22b).

3. Connecteur selon l'une quelconque des 1 ou 2, **caractérisé en ce que** ladite première plaque métallique de protection (42) s'étend dans un plan transversal orthogonal à la direction longitudinale (L) de la patte de raccordement (34a) qu'elle protège.

4. Connecteur selon la revendication 3, **caractérisé en ce que** la patte de raccordement (34a) de ladite première lame (22a) comporte au moins une branche verticale (36a) d'orientation transversale parallèle à ladite première plaque de protection (42).

5. Connecteur selon la revendication 4, **caractérisé en ce que** la patte de raccordement (34a) de ladite première lame (22a) comporte au moins une branche (38a) horizontale inférieure qui prolonge la branche verticale (36a) vers l'arrière et qui s'étend sensiblement dans le plan de la face inférieure (21) du bloc isolant (14).

6. Connecteur selon l'une des revendications 4 ou 5, **caractérisé en ce que** ladite première plaque protection (42) s'étend au moins sur toute la hauteur de la branche verticale (36a) de la patte de raccordement (34a).

7. Connecteur selon la revendication 6 prise en combinaison avec la revendication 5, **caractérisé en ce que** ladite première plaque de protection (42) s'étend verticalement vers le haut à partir dudit plan de la face inférieure (21) du bloc isolant (14).

8. Connecteur selon l'une quelconque des revendications 1 à 7, **caractérisé en ce que** le connecteur (10) comporte deux secondes plaques parallèles et opposées de protection (44) dont chacune s'étend verticalement en regard d'une portion de la patte de raccordement (34a) de ladite première lame (22a), s'étend dans un plan latéral parallèle à la direction longitudinale (L) de la patte de raccordement (34a) qu'elle protège, et est reliée électriquement à ladite deuxième lame (22b), de manière à protéger la patte de raccordement sur ses deux côtés longitudinaux.

9. Connecteur électrique selon l'une quelconque des revendications 1 à 8, **caractérisé en ce qu'**il comporte au moins une troisième plaque métallique de protection (50) qui s'étend horizontalement en regard de la portion médiane longitudinale de liaison (30a) de ladite première lame (22a) au bloc isolant, et qui est reliée électriquement à ladite deuxième lame (22b).

10. Connecteur électrique selon l'une quelconque des revendications 1 à 9, **caractérisé en ce qu'**il comporte un support (60) en matériau isolant qui porte chaque plaque de protection et qui est rapporté dans un logement complémentaire (64) de la face inférieure (21) du bloc isolant (14).

11. Connecteur électrique selon la revendication 10, **caractérisé en ce qu'**une cloison verticale en matériau isolant dudit support (60) est interposée entre chaque plaque de protection et la portion de ladite première lame (22a) en regard de laquelle s'étend cette plaque de protection.
